# EUROPÄISCHE PATENTANMELDUNG

(11) **EP 1 624 204 A1**
(43) Veröffentlichungstag der Anmeldung: **08.02.2006**
(21) Anmeldenummer: 04103763.1
(22) Anmeldetag: 05.08.2004
(51) Int. Cl.: F16C 3/06, F16D 1/068, F16D 1/08

(54) **Welle mit daran befestigtem Übertragungselement**

(71) Anmelder: Ford Global Technologies, LLC, A subsidary of Ford Motor Company, Dearborn, MI 48126 (US)
(72) Erfinder: Kluge, Torsten, 51491 Overath (DE)
(74) Vertreter: Drömer, Hans-Carsten

(57) **Zusammenfassung**

In einer erfindungsgemäßen Welle (1), insbesondere in einer erfindungsgemäßen Kurbelwelle, mit mindestens einem daran befestigten Übertragungselement (7) zum Übertragen der Drehbewegung der Welle (1) ist das Übertragungselement (7) derart aus zumindest zwei getrennten Komponenten (9, 11) zusammengesetzt, daß jede der Komponenten (9, 11) lediglich einen Teil des Umfangs der Welle (1) und das aus den Komponenten (9, 11) zusammengesetzte Übertragungselement (7) den gesamten Umfang der Welle (1) umgibt. Die erfindungsgemäße Welle (1) zeichnet sich dadurch aus, daß die Komponenten (9, 11) des Übertragungselementes (7) an der Welle (1) befestigt sind. Unter einem Übertragungselement (7) soll hierbei jedes Element zu verstehen sein, welches im Zusammenwirken mit anderen Übertragungselementen und/oder Riemen und/oder Ketten die Rotation der Welle (1) auf eine andere Welle übertragen kann. Als Übertragungselemente (7) können insbesondere, aber nicht ausschließlich Zahnräder, Zahnscheiben, Zahnkränze, Kettenräder und Riemenscheiben oder dergleichen Verwendung finden.

## Beschreibung

Die vorliegende Erfindung betrifft eine Welle, insbesondere eine Kurbelwelle, mit mindestens einem daran befestigten Übertragungselement zum Übertragen der Drehbewegung der Welle.

In einem Verbrennungsmotor dient die Kurbelwelle in Zusammenwirkung mit den Pleuelstangen dazu, die lineare Bewegung der Motorkolben in eine Rotationsbewegung umzusetzen, welche schließlich zum Antreiben der Räder dient. Danben wird die Rotationsbewegung der Kurbelwelle auch zu Steuerungs- und Einstellungszwecken, beispielsweise für das Öffnen und Schließen der Gaswechselventile genutzt. Eine Vorrichtung zum Verstellen der Steuerzeiten beim Gaswechsel ist beispielsweise in der DE 39 42 052 A1 beschrieben.

Zu Einstell- oder Steuerzwecken wird die Drehbewegung der Kurbelwelle beispielsweise mittels Zahnrädern, Ketten oder Riemen an eine weitere Welle übertragen. Auf der Kurbelwelle sind dann Zahnräder, Kettenräder bzw. Riemenscheiben, etc. angebracht. In DE 44 24 993 A1 ist beispielsweise eine Kurbelwelle mit einem Zahnrad beschrieben, welches zwischen zwei Kurbelwangen angeordnet ist. Um das Anordnen zwischen den Kurbelwangen zu ermöglichen, ist das Zahnrad zweigeteilt. Beim Montieren werden die beiden Teile auf der Kurbelwelle zusammengefügt, so daß sie nach der Montage ein komplettes, die Kurbelwelle umschließendes Zahnrad bilden. Die beiden Zahnradteile werden mittels Schrauben an den Kurbelwangen befestigt.

Aufgabe der vorliegenden Erfindung ist es, eine verbesserte Welle, insbesondere eine verbesserte Kurbelwelle, mit einem mindestens zweigeteilten Übertragungselement zum Übertragen der Drehbewegung der Welle zu schaffen. Diese Aufgabe wird durch eine Welle nach Anspruch 1 gelöst. Die abhängigen Ansprüche enthalten vorteilhafte Weiterbildungen der erfindungsgemäßen Welle.

In einer erfindungsgemäßen Welle, insbesondere in einer erfindungsgemäßen Kurbelwelle, mit mindestens einem daran befestigten Übertragungselement zum Übertragen der Drehbewegung der Welle ist das Übertragungselement derart aus zumindest zwei getrennten Komponenten zusammengesetzt, daß jede der Komponenten lediglich einen Teil des Umfangs der Welle und das aus den Komponenten zusammengesetzte Übertragungselement den gesamten Umfang der Welle umgibt. Die erfindungsgemäße Welle zeichnet sich dadurch aus, daß die Komponenten des Übertragungselementes an der Welle befestigt sind. Unter einem Übertragungselement soll jedes Element zu verstehen sein, welches im Zusammenwirken mit anderen Übertragungselementen und/oder Riemen und/oder Ketten die Rotation der Welle auf eine andere Welle übertragen kann. Als Übertragungselemente können insbesondere, aber nicht ausschließlich Zahnräder, Zahnscheiben, Zahnkränze, Kettenräder, Riemenscheiben oder dergleichen Verwendung finden.

Das Befestigen der Komponenten an der Welle selbst und nicht - wie im Stand der Technik - an den Kurbelwangen schafft die Möglichkeit, das Übertragungselement nicht nur zwischen zwei Kurbelwangen anzuordnen, sondern an jeder beliebigen Position der (Kurbel)welle, insbesondere an solchen Positionen, an denen der Wellendurchmesser gegenüber den Durchmessern benachbarter Wellenbereiche verringert ist. Das Befestigen des Übertragungselementes kann beispielsweise mittels Schrauben, Schweißen, insbesondere Reibungsschweißen, Punktschweißen, Lichtbogenschweißen, etc., sowie mittels Löten, Kleben oder Verspannen erfolgen. Darüber hinaus ist es auch möglich, zum Befestigen des Übertragungselementes an der Welle Sprengringe, Spannringe, Spannriemen und dergl. zu verwenden.

In einer vorteilhaften Ausgestaltung der vorliegenden Erfindung weisen die Komponenten des Übertragungselementes Wirkflächen auf, welche im an der Welle angebrachten Zustand mit entsprechenden Wirkflächen der anderen Komponente bzw. Komponenten des Übertragungselementes in Kontakt stehen. Jede Wirkfläche weist dabei ein Profil auf, welches zu derjenigen Wirkfläche komplementär ist, mit der sie im an der Welle angebrachten Zustand des Übertragungselementes in Kontakt steht. Die Wirkflächen wirken dann einem Verdrehen bzw. Verschieben der Komponenten relativ zueinander entgegen und führen außerdem zu einer besseren Verteilung einer an einer Komponente angreifenden beispielsweise in Axialrichtung der Welle wirkende Kraftkomponente auf die übrigen Komponenten des Übertragungselementes.

Das Herstellen der profilierten Wirkflächen kann beispielsweise dadurch geschehen, daß ein Übertragungselement einstückig hergestellt wird und anschließend in seine Komponenten beispielsweise durch Zersägen oder Zerschneiden, zerlegt wird. Das Zersägen oder Zerschneiden kann derart geschehen, daß dabei gleichzeitig die Profilierung der Wirkflächen erfolgt. In einer bevorzugten Alternative, wird das Übertragungselement einstückig hergestellt und anschließend kontrolliert zerbrochen. Die Bruchflächen stellen dabei Wirkflächen dar, welche aufgrund ihrer Unebenheit ein rauheres Profil aufweisen. Die Profile der Wirkflächen eines in seine Komponenten zerbrochenen Übertragungselementes sind dabei aufgrund des Herstellungsprozesses komplementär zueinander. Auf diese Weise lassen sich einfach und kostengünstig komplementäre Wirkflächen erzeugen. Alternativ zur einstückigen Herstellung ist es aber auch möglich, die Komponenten des Übertragungselementes getrennt herzustellen und bei diesem Herstellungsprozeß die Profile der Wirkflächen herzustellen.

Weitere Eigenschaften, Merkmale und Vorteile der vorliegenden Erfindung ergeben sich aus der nachfolgenden Beschreibung eines Ausführungsbeispiels unter Bezugnahme auf die beiliegenden Figuren.
- Fig. 1: zeigt einen Ausschnitt aus einer Kurbelwelle mit einem daran befestigten zweigeteilten Zahnrad;
- Fig. 2: zeigt die beiden Komponenten des zweigeteilten Zahnrades aus Fig. 1.

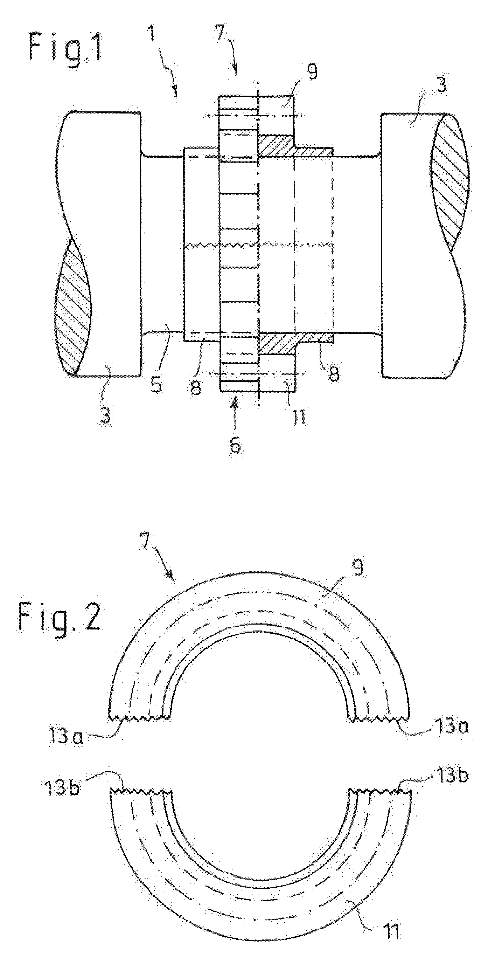

Als ein Ausführungsbeispiel für die erfindungsgemäße Welle ist in Figur 1 eine Nockenwelle 1 dargestellt, welche erste Bereiche 3 und einen zweiten Bereich 5 aufweist. Der Durchmesser der Nockenwelle 1 ist im zweiten Bereich 5 gegenüber dem in den ersten Bereichen 3 verringert.

Im zweiten Bereich 5 ist ein Zahnrad 7 mit der Nockenwelle 1 verschweißt. Das Zahnrad 7 dient als Übertragungselement zum Übertragen von Drehbewegungen der Nockenwelle 1, welches im Ausführungsbeispiel als Teil einer Stelleinrichtung zum Einstellen bspw. der Steuerzeiten der Gaswechselventile eines Verbrennungsmotors fungiert. Statt einem Zahnrad 7 kann auch ein Zahnkranz, ein Kettenrad, eine Riemenscheibe oder dergleichen im zweiten Bereich 5 der Nockenwelle befestigt sein. Außerdem ist es auch möglich, mehr als ein Übertragungselement im zweiten Bereich 5 oder in verschieden zweiten Bereichen der Nockenwelle 1 anzubringen, wobei diese Übertragungselemente auch nicht identisch ausgestaltet zu sein brauchen. Es kann also bspw. in einem zweiten Bereich 5 der Nockenwelle 1 ein Zahnrad 7 angebracht sein, während im selben oder in einem anderen zweiten Bereich 5 der Nockenwelle 1 eine Riemenscheibe angebracht ist. Wenn im Folgenden von einem Zahnrad 7 die Rede ist, so soll dies daher auch synonym für andere mögliche Übertragungselemente stehen.

Das im zweiten Bereich 5 der Nockenwelle 1 befestigte Zahnrad 7 ist als zweigeteiltes Zahnrad ausgestaltet. Wie in Figur 2 dargestellt, umfaßt das Zahnrad 7 ein erstes Teilzahnrad 9 und ein zweites Teilzahnrad 11, welche jeweils zwei Wirkflächen 13 aufweisen, an denen sie aneinander zur Anlage kommen, wenn die Teilzahnräder 9, 11 an der Nockenwelle 1 befestigt sind. Statt wie im Ausführungsbeispiel zwei Teilzahnräder 9, 11, kann das Zahnrad 7 auch drei oder mehr Teilzahnräder umfassen.

Die Wirkflächen 13 der Teilzahnräder 9, 11 weisen Profile auf, wobei die Profile einander gegenüberliegender Wirkflächen 13a, 13b komplementär zueinander sind. Mit anderen Worten, Vorsprünge im Profil der Wirkfläche 13a des einen Teilzahnrades 9 greifen in Rücksprünge im Profil der Wirkfläche 13b des zweiten Teilzahnrades 11 ein und umgekehrt.

Ein einfaches Verfahren zum Herstellen der komplementären Profile besteht darin, das Zahnrad 7 einstückig herzustellen und anschließend kontrolliert in die beiden Teilzahnräder 9, 11 zu zerbrechen. Alternativ ist es jedoch auch möglich, das Zahnrad 7 in die Teilzahnräder 9, 11 zu zersägen oder zu zerschneiden. Das Profil kann dann etwa beim Zersägen bzw. Zerschneiden in die Wirkflächen 13 eingebracht werden. Schließlich ist es auch möglich, das erste Teilzahnrad 9 und das zweite Teilzahnrad 11 von vornherein als getrennte Elemente herzustellen. Dieser Herstellungsprozeß kann derart ausgestaltet sein, daß bereits beim Herstellen oder nach dem Herstellen das Profil der Wirkflächen 13 erzeugt wird.

Im vorliegenden Ausführungsbeispiel weist das Zahnrad 7 einen einzigen Zahnkranz 6 und zwei Stufen 8 auf. Die Erfindung ist jedoch nicht auf ein derartiges Zahnrad beschränkt. Es können auch andere Übertragungselemente mit Zahnkränzen, ggf. auch mit mehreren Zahnkränzen, oder ohne Zahnkränze sowie mit einer beliebigen Anzahl Stufen oder ganz ohne Stufen Verwendung finden.

Ebenso ist das Zahnrad 7 nicht auf das Anbringen in einem Wellenbereich 5, in dem ein verringerter Durchmesser vorliegt, beschränkt. Ebenso ist es möglich, die Teilzahnräder 9, 11 im Bereich einer Welle - etwa einer Kurbelwelle - anzubringen, welcher beispielsweise zwischen zwei Kurbelwangen, Schwungrädern oder Schwungscheiben, etc. liegt.

Das Befestigen des Zahnrades 7 an der Welle 1 kann mittels jeder geeigneten Methode erfolgen. Beispielhaft seien hier das Verschrauben, das Verkleben, das Reibungsschweißen, das Punktschweißen, das Lichtbogenschweißen, etc. genannt. Ebenso können Lötverfahren oder Verklammerungsprozesse zum Fixieren des Zahnrades zur Anwendung kommen. Auch das Befestigen mittels eines Spannrings, eines Sprengrings oder eines Spannriemen ist grundsätzlich möglich.

Die beschriebenen Übertragungselemente eignen sich insbesondere für Rotationsübertragungen, bei denen geringe Belastungen auftreten. Sie ermöglichen es, moderne Motordesigns mit hohen Anforderungen an die Kosteneffizienz sowie die Packungsdichte der Bauteile zu realisieren. Außer an Kurbelwellen können sie auch anderen Wellen, bspw. der Nockenwelle, zum Einsatz kommen.

## Patentansprüche

1. Welle mit mindestens einem daran befestigten Übertragungselement (7) zum Übertragen der Drehbewegung der Welle (1), wobei das Übertragungselement (7) derart aus zumindest zwei getrennten Komponenten (9, 11) zusammengesetzt ist, daß jede der Komponenten (9, 11) lediglich einen Teil des Umfangs der Welle (1) und das aus den Komponenten (9, 11) zusammengesetzte Übertragungselement (7) den gesamten Umfang der Welle umgibt,
**dadurch gekennzeichnet, daß**
die Komponenten (9, 11) an der Welle (1) befestigt sind.

2. Welle nach Anspruch 1, bei der das Übertragungselement (7) an einem Bereich (5) der Welle (1) befestigt ist, der einen gegenüber den Nachbarbereichen (3) verminderten Durchmesser aufweist.

3. Welle nach Anspruch 1 oder 2,
**dadurch gekennzeichnet, daß**
die Komponenten (9, 11) des Übertragungselementes (7) Wirkflächen (13a, 13b) aufweisen, die im an der Welle (1) angebrachten Zustand mit entsprechenden Wirkflächen (13a, 13b) der anderen Komponente(n) (9, 11) des Übertragungselementes in Kontakt stehen, wobei jede Wirkfläche (13a, 13b) ein Profil aufweist, welches zu derjenigen Wirkfläche (13a, 13b) komplementär ist, mit der sie im an der Welle (1) angebrachten Zustand des Übertragungselementes (7) in Kontakt steht.

4. Welle nach Anspruch 3,
**dadurch gekennzeichnet, daß**
die Wirkflächen (13a, 13b) als Bruchflächen ausgestaltet sind.

5. Welle nach einem der vorangehenden Ansprüche,
**dadurch gekennzeichnet, daß**
das Übertragungselement als Zahnrad (7), Kettenrad oder Riemenscheibe ausgestaltet ist.

6. Welle nach einem der vorangehenden Ansprüche, **gekennzeichnet durch** ihre Ausgestaltung als Kurbelwelle oder Nockenwelle (1).
